# EUROPÄISCHE PATENTSCHRIFT

(11) **EP 1 193 403 B1**
(45) Veröffentlichungstag und Bekanntmachung des Hinweises auf die Patenterteilung: **11.04.2007**
(21) Anmeldenummer: 01122926.7
(22) Anmeldetag: 25.09.2001
(51) Int. Cl.: F16B 5/06, B60R 13/02, F16B 21/06, F16B 37/04

(54) **Vorrichtung zur justierbaren Halterung von Platten**
Device for adjustably mounting panels
Dispositif pour la fixation réglable des panneaux

(30) Priorität: 29.09.2000 DE 20016889 U
(43) Veröffentlichungstag der Anmeldung: 03.04.2002
(73) Patentinhaber: SFS intec Holding AG, 9435 Heerbrugg (CH)
(72) Erfinder: Schwarz, Helmut, 71263 Weil der Stadt (DE)

(56) Entgegenhaltungen:
- DE-A- 3 842 229
- DE-A- 4 138 047
- DE-U- 29 716 096

## Beschreibung

Die Erfindung betrifft eine Feder-Clip-Steckverbindung für in Flug- und Fahrzeugbau lösbar anzubringende Wandverkleidungselemente gemäß dem Oberbegriff des Patentanspruches 1.

Solche Feder-Clip-Steckverbindungen sind bekannt.

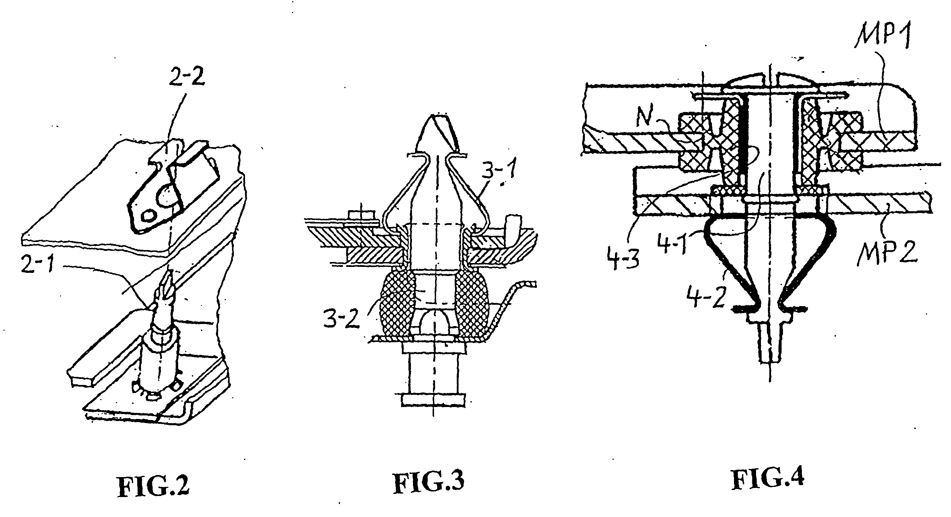

So ist in der DE-A-41 3 8 047 eine Feder-Clip-Verbindung beschrieben, bei der ein mit einem ersten Teil verbundener Halte-Steck-Bolzen mit einer an einem zweiten Teil befestigte Haltefeder in Eingriff gebracht wird (FIG.2). Diese Haltefeder hat ein satteldachähnliches Profil mit zum First hin freien Federarmen.

In dem Deutschen Gebrauchsmuster DE-U-297 16 096.6 ist ein Schnellverschluss beschrieben, der eine Haltefeder und einen an seinem freien Ende zugespitzten mit seitlichen Kerben versehenen Halte-Steck-Bolzen umfasst. Die Haltefeder ist eine dreieckförmig gebogene Blattfeder mit einer Bohrung im mittleren Basisteil für den Durchtritt des Bolzens, vgl. FIG.3.

In dem deutschen Gebrauchsmuster DE-U-299 20 497.9 -vgl. Figur 4 - ist eine schwingungsdämpfende lösbare Verbindungsanordnung für zwei Bauteile und mit einem Halte-Steck-Drehbolzen, einer Haltefeder und sowie mit einem Schwingungsdämpferring beschrieben. Der Halte-Steck-Bolzen ist an seinem freien Ende zugespitzt und mit zwei seitlichen Kerben versehen, in welche die beiden federnden Enden der satteldachähnlich ausgebildeten als Haltefeder dienende Blattfeder eingreifen. Der Schwingungsdämpferring aus elastischen Material weist eine periphere Nut auf, in welcher das erste Bauteil getragen wird. Der Halte-Steck-Bolzen ist in einer Buchse geführt, welche in der Öffnung des Schwingungsdämpferrings angeordnet ist. Die Verbindungsanordnung kann durch Drehen des Bolzens gelöst werden, wobei sich die Schenkel der Haltefeder nach außen spreizen.

Bei allen diesen bekannten Anordnungen sind die Wandverkleidungselemente mit jeweils nur ihnen direkt zugeordneten Teilen zur Herstellung der Feder-Clip-Steckverbindung verbunden, was zu Schwierigkeiten bei passgenauer Anbringung von Wandverkleidungselementen an den Innenwandungen von Flug- und Fahrzeugen führt.

Es ist Aufgabe der Erfindung, eine neue mehreren Wandverkleidungselementen zugeordnete, ihnen gemeinsame Einheit zur Herstellung einer Feder-Clip-Steckverbindungen zu schaffen, die eine Justiermöglichkeit in X- / Y-Richtung eines orthogonalen Koordinatensystems bieten soll.

Diese Aufgabe der Erfindung wird durch die Merkmale des Patentanspruches 1 gelöst.

Vorteilhafte Weiterbildungen der Erfindung sind in den Unteransprüchen gekennzeichnet

Aus der DE-A-38 42 229 ist zwar ein justierbares Kopfplatten-Zwischenbauteil für den Stahlhochbau bekannt, um die durch die Stahlbewährung der Betonbauteile bedingten Abweichungen beim Setzen der Dübellöcher zur Aufnahme der die Kopfplatten tragenden Dübel auszugleichen. Hierzu ist das Zwischenbauteil als an der Oberfläche des Stahlbetonbauteils aufliegendes Formteil ausgebildet und weist eine als Langloch ausgebildete in X-Richtung ausgerichtete Öffnung auf, durch die der jeweils einzige Dübel hindurch greift zwecks Aufnahme einer Schraubverbindung für das anzubringende Betonbauteil. Zwecks besserer Anpassung der an dem Dübel angreifenden Zug- und Normalkräfte ist dem Zwischenbauteil eine aus Stahl bestehende Grundplatte zugeordnet, die zwei in Y-Richtung ausgerichtete Langlöcher aufweist, um das aufzunehmende Bauteil justieren zu können.

Ein solches Kopfplatten-Zwischenbauteil aus dem Hochbau konnte keine Anregung für die hier vorliegende lösbare Feder-Clip-Steckverbindung aus dem extremen Leichtbau geben.

Ein Ausführungsbeispiel der Erfindung ist in den Zeichnungen dargestellt und wird im folgenden näher beschrieben. Es zeigen:
FIG. 1
   eine auseinandergezogene schematische Darstellung der zwischen einer Wand und den Wandverkleidungselementen angeordneten Platten-Einheit mit Halte-Federn und den Haltern (für die Wandverkleidungselemenete) mit Halte-Steck-Bolzen;
FIG.2
   eine Haltefeder/Halte-Steck-Bolzen-Verbindung nach dem Stand der Technik zur vorzugsweisen Befestigung von Verkleidungselementen in Flugzeugen und Fahrzeugen;
FIG.3
   eine weitere Haltefeder/Halte-Steck-Bolzen-Verbindung nach dem Stand der Technik ;
FIG.4
   eine Haltefeder/Halte-Steck-Bolzen-Verbindung nach dem Stand der Technik mit einem Schwingungs-Dämpferring;
FIG.5
   eine Aufsicht auf die Oberseite der erfindungsgemäßen Platten-Einheit in perspektivischer Darstellung, bestehend aus einer Basis-Platte und einer Halte-Platte mit Halte-Federn;
FIG.6
   eine Aufsicht auf die Unterseite der erfindungsgemäßen Platten-Einheit in perspektivischer Darstellung;
FIG.7
   eine auszugsweise perspektivische Darstellung der Verbindung des Halte-Steck-Bolzens eines Halters (für ein Wandverkleidungselement) mit der Halte-Feder einer Halte-Platte.

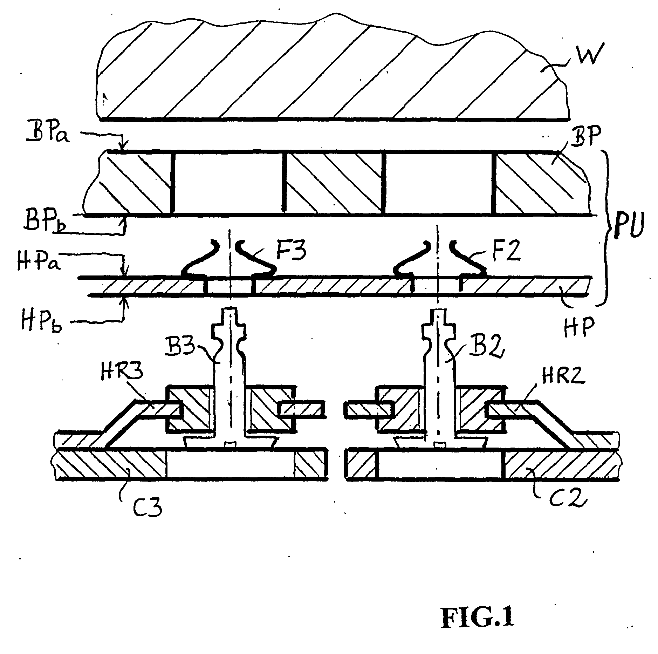

Aus Übersichtsgründen sei zunächst auf FIG. 1 verwiesen.

FIG. 1 zeigt
die schematische Abfolge der zwischen einer Wand W und den Abdeckplatten C 2, C3 angeordneten Platten-Einheit PU und Halterelementen HR2, HR3 mit Steck-Bolzen B2 und B3. Die Platten-Einheit PU besteht aus einer Platte HP (künftig Halte-Platte HP genannt)mit 4 Halte-Federn F1-F4 (von denen nur zwei in FIG.1 gezeigt sind) und einer Basisplatte BP.
Die Halte-Platte HP und die Basis-Platte BP sind miteinander (z.B. durch Schraubverbindung) verbunden. Die Oberseite der Halte-Platte HP ist mit HPa, ihre Unterseite mit HPb bezeichnet.
Die Oberseite der Basisplatte BP ist mit BPa, ihre Unterseite mit BPb bezeichnet.

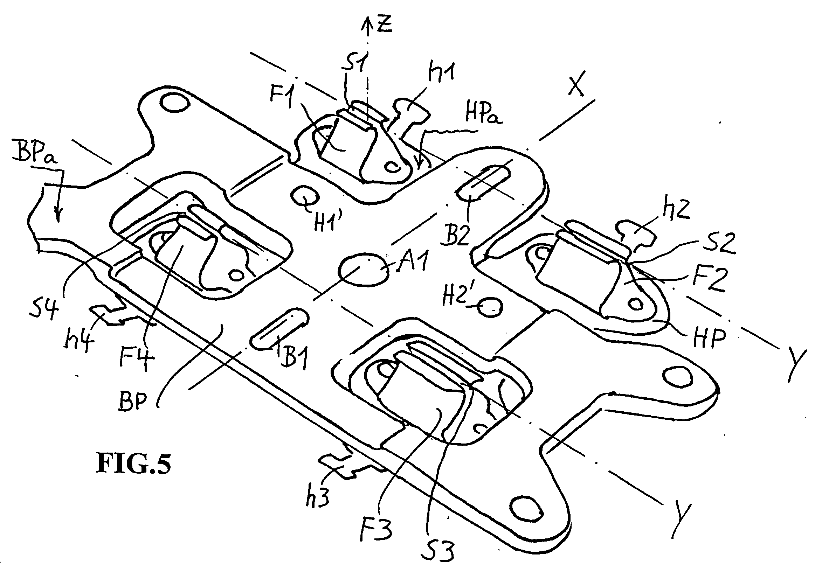

**FIG.5 zeigt**
eine perspektivische Aufsicht auf die Oberseite der Platten-Einheit PU bestehend aus der Halte-Platte HP und der Basis-Platte BP;

FIG.6 zeigt
eine perspektivische Aufsicht auf die Unterseite der Platten-Einheit bestehend aus aus der Haltefeder-Platte HP und der **Basis-Platte BP ;**
Die Basis-Platte BP ist mit der in Fig. 5 unter ihr und in FIG.6 über ihr angeordneten Halte-Platte HP über die Schraubverbindungen H1' und H2' verbunden.
In der Halte-Platte HP sind zwei in Y-Richtung ausgerichtete Langlöcher H1 und H2 vorgesehen (s. FIG. 6).

Bei gelöster Schraubverbindung H1' und H2' kann die Halte-Platte HP gegenüber der Basis-Platte BP in Y-Richtung verschoben werden.
Die Basis-Platte BP weist zwei in X-Richtung ausgerichetete Langlöcher B1 und B2 auf, durch welche die Basis-Platte z.B. mittels Schrauben (nicht dargestellt) mit der Wand verbunden werden kann.
Die in der Basis-Platte BP vorgesehene Bohrung A1 fluchtet mit der in der Halte-Platte HP vorgesehenen Bohrung A2, wenn die Schraubverbindungen H1' und H2' eine auf die Mitte der Langlöcher H1 und H2 ausgerichtete Position ("mittige Nullstellung") einnehmen.
Fluchtende Bohrungen A1 und A2 gestatten somit eine visuelle Kontrolle der "mittigen Nullstellung".
Durch die in X-Richtung ausgerichteten Langlöcher B1 und B2 in der Basis-Platte BP und durch die in Y- Richtung ausgerichteten Langlöcher H1 und H2 in der Halte-Platte HP (X,Y bezeichnen orthogonale Koordinaten-Richtungen) ist eine X/Y Justierung der Platten-Einheit PU möglich.
Die Basis-Platte BP ist über die Langlöcher B1 und B2 in X-Richtung, die Halte-Platte HP ist über die Langlöcher H1 und H2 in Y-Richtung justierbar.
Auf der Oberseite HPa der Halte-Platte HP sind an den gedachten Eckpunkten eines Rechteck in X/Y-Ausrichtung Haltefedern F1, F2, F3 und F4 angebracht (z.B. durch Vernieten).
Diese Haltefedern weisen eine satteldach-ähnliche Ausbildung mit offenem First-Spalt auf; ihre einander zugeneigten Blattfederarme federn, sie können gespreizt werden, wenn z.B. ein Halte-Steck-Bolzen in Richtung Z durch ihren Schlitz S1 -S4 geschoben (gesteckt) wird, bis die Enden der Federarme in seine seitlichen Kerben zur Herstellung einer Halte-Verbindung "einrasten". Diese Halte-Verbindung ist- wie noch an anderer Stelle beschrieben wird, lösbar.

Alle Spalte S1 -S4 der Haltefedern F1-F4 sind in Y- Richtung ausgerichtet.
Die Spalte der Halte-Federn F1 und F2 bzw. F3 und F4 liegen in der gleichen Fluchtlinie.
Die Haltefedern F1 und F4 weisen einen kürzeren Spalt als die Haltefedern F2 und F3 auf.
Die Basis der Haltefedern und die Halte-Platte HP weisen durchgehende fluchtende Öffnungen F1', F2', F3' und F4' auf. Die Öffnungen F1' und F4' sind als Bohrung, die Öffnungen F2' und F3' als in Y-Richtung verlaufende Langlöcher ausgeführt.
Diese Langlochausführung gestattet eine Verschiebung des Halte-Steck-Bolzens im Schlitz der Haltefedern in Y- Richtung. Auf diese Weise können zwischenzeitlich auftretende Verschiebungen von Abdeckplatten aufgefangen werden.

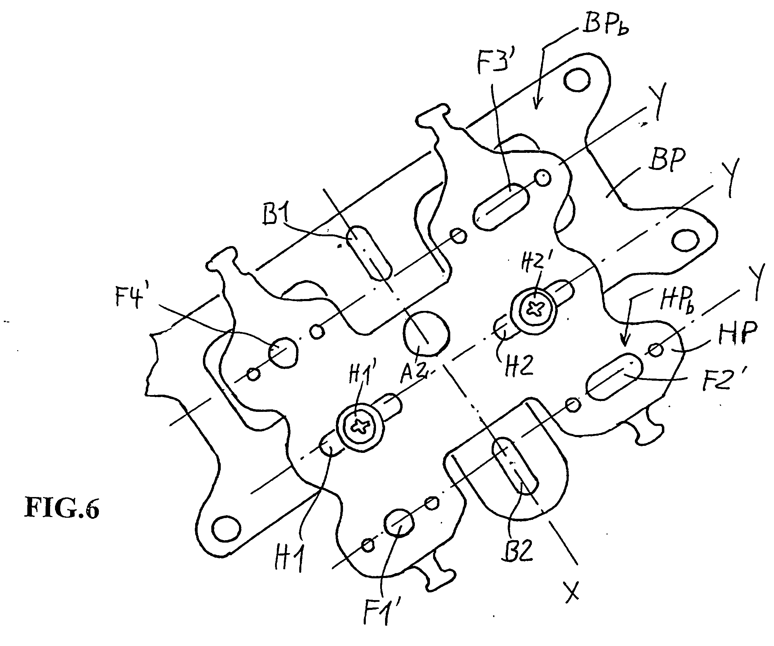

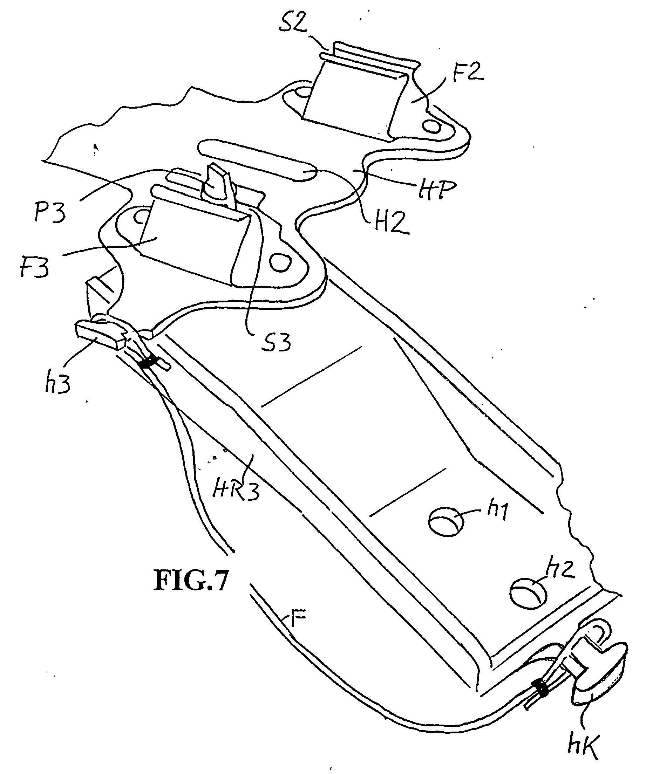

FIG.7 zeigt
eine auszugsweise perspektivische Darstellung der Verbindung eines mit einem Halte-Steck-Bolzen P3 versehenen Halters HR3 (für ein Wandverkleidungselement) mit der Halte-Feder F3 der Halte-Platte HP.
Der Halte-Steck-Bolzen P3 ist durch die Öffnung F3' (FIG.6) hindurch soweit in die Haltefeder F3 hineinsteckbar, bis deren Federarme in seine seitlichen Halte-Kerben des Bolzens einrasten.
Der Halter HR3 weist zwei Bohrungen h1 und h2 zur Befestigung eines Wandverkleidungselementes (nicht dargestellt) auf - der Zugang zum Halte-Steck-Bolzen-Kopf muß für das Lösen der Halteverbindung gewährleistet bleiben.
Ebenso ist es aber auch möglich, auf den Halter zu verzichten, falls das Wandverkleidungselement direkt mit dem Halte-Steck-Bolzen verbunden werden kann (je nach den vorliegenden konstruktiven Besonderheiten).

Die erfindungsgemäße Platten-Einheit PU gestattet u.a. eine genaue und schnelle Justierung quadrantenförmig ausgebildeter und an einem gemeinsamen Eckpunkt zusammentreffender Wandverkleidungselemente o. dgl.
Um bei der Demontage, nach Lösen der Halteverbindung zwischen Halte-Feder und Halte-Steck-Bolzen ein versehentliches "Abstürzen" (Hinunterfallen) des gelösten Wandverkleidungselementes zu verhindern, ist eine "Fangschnur" F vorgesehen, welche bei der Montage mit einem Schlaufenende am Haken hk des Halters HR3 (bzw. eines Wandverkleidungselementes) und mit dem anderen Schlaufenende am zugehörigen Haken h3 an der Halte-Platte HP eingehängt werden kann. Die Fangschnur ermöglicht zudem auch eine beidhändige Justierung der Platten-Einheit, da ihre Länge einen dafür ausreichenden Abstand zwischen der Platten-Einheit PU und dem Halter garantiert.

## Patentansprüche

1. Feder-Clip-Steckverbindung für in Flug- oder Fahrzeugen lösbar anzubringende Wandverkleidungselemente (C), mit auf einer Halteplatte (HP) befestigten Haltefedern (F), in die mit den Wandverkleidungselementen (C) verbundene Steckbolzen (B) zur Herstellung einer lösbaren Halteverbindung einrastbar sind, **dadurch gekennzeichnet, dass** eine Basisplatte (BP) mindestens zwei miteinander fluchtende in eine erste X-Richtung eines orthogonalen Koordinatensystems ausrichtete Langlöcher (B1, B2) aufweist, dass die Halteplatte (HP) mindestens zwei miteinander fluchtende in eine zweite Y-Richtung des Koordinatensystems ausrichtete Langlöcher (H1, H2) aufweist, dass nach einer mittels der Langlöcher (B1, B2) in die erste X-Richtung ausgerichteten Befestigung der Basisplatte (BP) an einer Wand (W) des Flug- oder Fahrzeuges die Halteplatte (HP) mittels als Schraubverbindung ausgebildeter in die Langlöcher (H1, H2) der Halteplatte (HP) eingreifender Verbindungselemente (H1', H2') gegenüber der Basisplatte (BP) durch fluchtende Ausrichtung von je einer Bohrung (A2, A1) in Basis- und Halteplatte (BP, HP) in einer zur Basisplatte mittigen Nullstellung festlegbar ist, so dass auf der Halteplatte (HP) auf der der Basisplatte(BP) zugewandten Seite an den Eckpunkten des in in die erste und zweite X-Y-Richtungen ausgerichteten Rechtecks angeordnete Haltefedern (F1 - F4), die einen in die zweite Y-Richtung verlaufenden Spalt (S1 bis S4) aufweisen, mit jeweils einem Halte-Steck-Bolzen (P3), der direkt oder indirekt mit jeweils einem Wandverkleidungselement (C3) verbunden ist, in Wirkverbindung bringbar sind.

2. Feder-Clip-Steckverbindung nach Anspruch 1, **dadurch gekennzeichnet, dass** in den Haltefedern (F1 - F4) und in der Halteplatte (HP) durchgehende Öffnungen (F1' - F4') zum Hindurchführen der Halte-Bolzen (P1 - P4) vorgesehen sind.

3. Feder-Clip-Steckverbindung nach Anspruch 1, **dadurch gekennzeichnet, dass** mindestens zwei dieser Öffnungen (F2' und F3') als in Y-Ausrichtung sich erstreckende Langlöcher ausgeführt sind.

4. Feder-Clip-Steckverbindung nach Anspruch 1, **dadurch gekennzeichnet, dass** die Basis-Platte (BP) Aussparungen für den Durchschnitt der Haltefedern (F1 - F4) aufweist.

5. Feder-Clip-Steckverbindung nach Anspruch 1, **dadurch gekennzeichnet, dass** die Halte-Platte (HP) mit Haken (h1 -h4) zum gedachten Einhängen der Enden von Fangschnüren (F) versehen ist.

## Claims

1. A spring-clip plug connector for wall-panelling elements (C) to be releasably mounted in aircraft or vehicles, with retaining springs (F) which are fastened to a retaining plate (HP) and into which lock pins (B) connected to the wall-panelling elements (C) can engage so as to provide a releasable retaining connection, **characterised in that** a base plate (BP) has at least two mutually aligning slots (B1,B2) aligned in a first X-direction of an orthogonal co-ordinates system, **in that** the retaining plate (HP) has at least two mutually aligning slots (H1,H2) aligned in a second Y-direction of the co-ordinates system, **in that**, after the fastening of the base plate (BP) to a wall of the aircraft or vehicle aligned by means of the slots (B1,B2) in the first X-direction, the retaining plate (HP) can be located by means of connecting elements (H1',H2') in the form of a threaded connection engaging into the slots (H1,H2) of the retaining plate (HP) with respect to the base plate (BP) by axial alignment of a respective bore (A2,A1) in a base plate and retaining plate (BP,HP) in a central neutral position with respect to the base plate so that retaining springs (F1-F4), which are arranged on the retaining plate (HP) on the side facing the base plate (BP) aligned at the corner points of the rectangle aligned in the first and second X-Y-directions and which have a gap (S1 to S4) extending in the second Y-direction, can be brought into operative connection with a respective retaining lock pin (P3) which is connected directly or indirectly to a respective wall-panelling element (C3).

2. A spring-clip plug connector according to Claim 1, **characterised in that** through-openings (F1'-F4') in the retaining springs (F1-F4) and in the retaining plate (HP) are provided for the passage of the retaining pins (P1-P4).

3. A spring-clip plug connector according to Claim 1, **characterised in that** at least two of these openings (F2' and F3') are in the form of slots extending in Y-alignment.

4. A spring-clip plug connector according to Claim 1, **characterised in that** the base plate (BP) has recesses for the passage of the retaining springs (F1-F4).

5. A spring-clip plug connector according to Claim 1, **characterised in that** the retaining plate (HP) is provided with hooks (h1-h4) for the intended suspension of the ends of safety cords (F).

## Revendications

1. Liaison à clip élastique embrochable pour des éléments d'habillage de paroi (C) installés de façon amovible dans des avions ou des véhicules, comprenant des ressorts de maintien (F) fixés sur une plaque de support (HP) dans lesquels on peut encliqueter les axes embrochables (B) reliés aux éléments d'habillage de paroi (C) pour réaliser une liaison amovible,
**caractérisée en ce qu'**
une plaque de base (BP) présente au moins deux trous oblongs (B1, B2) alignés l'un sur l'autre s'étendant dans une première direction X d'un système de coordonnées orthogonal, la plaque de support (HP) présente au moins deux trous oblongs (H1, H2) alignés l'un sur l'autre s'étendant dans une deuxième direction Y du système de coordonnées, après avoir fixé au moyen d'une fixation orientée par les trous oblongs (B1, B2) dans la première direction X la plaque de base (BP) sur une paroi (W) de l'avion ou du véhicule la plaque de support (HP), des éléments de liaison (Hl', H2') en forme de vissages engagés dans les trous oblongs (H1, H2) la plaque de support (HP) permettent de fixer contre la plaque de base (BP) grâce à l'orientation alignée de respectivement un alésage (A2, A1) dans les plaques de base et de support (BP, HP), dans une position neutre centrale par rapport à la plaque de base, de sorte que sur la plaque de support (HP), du côté tourné vers la plaque de base (BP), des ressorts de maintien (F1 - F4) munis d'une fente (S1 à S4) orientée dans la deuxième direction X et disposés au niveau des points d'angle du rectangle orienté dans la première et la deuxième directions X - Y, peuvent coopérer avec respectivement un axe de maintien embrochable (P3) directement ou indirectement relié à chaque fois à un élément d'habillage de paroi (C3).

2. Liaison à clip élastique embrochable selon la revendication 1,
**caractérisée en ce que**
des ouvertures traversantes (F1' - F4') sont prévues dans les ressorts de maintien (F1 - F4) et dans la plaque de support (HP) pour le passage des axes de maintien (P1 - P4).

3. Liaison à clip élastique embrochable selon la revendication 1,
**caractérisée en ce qu'**
au moins deux de ces ouvertures (F2' et F3') sont des trous oblongs s'étendant dans la direction Y.

4. Liaison à clip élastique embrochable selon la revendication 1,
**caractérisée en ce que**
la plaque de base (BP) présente des évidements pour le passage des ressorts de maintien (F1 - F4).

5. Liaison à clip élastique embrochable selon la revendication 1,
**caractérisée en ce que**
la plaque de support (HP) est munie de crochets (h1 - h4) pour l'accrochage éventuel des extrémités de cordes de sécurité (F).
